Europäisches Patentamt

European Patent Office

Office européen des brevets

(19)

(11) Veröffentlichungsnummer: **0 269 603**
**B1**

(12) **EUROPÄISCHE PATENTSCHRIFT**

(45) Veröffentlichungstag der Patentschrift: **06.02.91**

(21) Anmeldenummer: **87890232.9**

(22) Anmeldetag: **21.10.87**

(51) Int. Cl.⁵: **B 23 K 15/00,** B 23 K 20/08, E 01 B 7/10

(54) Verfahren zur Herstellung von Weichenherzstücken.

(30) Priorität: **29.10.86 AT 2873/86**

(43) Veröffentlichungstag der Anmeldung:
**01.06.88 Patentblatt 88/22**

(45) Bekanntmachung des Hinweises auf die Patenterteilung:
**06.02.91 Patentblatt 91/06**

(84) Benannte Vertragsstaaten:
**AT BE CH DE ES FR GB GR IT LI LU NL SE**

(56) Entgegenhaltungen:
EP-A-0 105 864
DE-B-1 185 305
DE-C-2 363 391

(73) Patentinhaber: **VOEST-ALPINE Aktiengesellschaft**
**Turmstrasse 44**
**A-4020 Linz (AT)**

(72) Erfinder: **Rotter, Franz, Dipl.-Ing.**
**Bessemerstrasse 22**
**A-8740 Zeltweg (AT)**
Erfinder: **Pirker, Robert, Ing.**
**Marhaltstrasse 26**
**A-8740 Zeltweg (AT)**
Erfinder: **Schrotter, Ernst, Dipl.-Ing.**
**A-8734 Mitterlobming 36 (AT)**

(74) Vertreter: **Kretschmer, Adolf, Dipl.-Ing. et al**
**Patentanwälte Dipl.Ing. A. Kretschmer Dr.**
**Thomas M. Haffner Schottengasse 3a**
**A-1014 Wien (AT)**

## Beschreibung

Die Erfindung bezieht sich auf ein Verfahren zur Herstellung von Weichenherzstücken oder Schienenstücken im Radüberlaufbereich von Weichen bei welchem eine hochverschleißfeste Radlauffläche aus einem aushärtbaren Stahl mit der Zusammensetzung

C 0,01 bis 0,05%
Si 0,01 bis 0,2%
Mn 0,01 bis 0,2%
Co 0 bis 15%
Mo 1,5 bis 6%
Ni 7 bis 20%
Ti 0,1 bis 1%
Cr 0 bis 13%
Al 0 bis 0,2%
B 0 bis 0,1%
Zr 0 bis 0,1%.

auf einen Grundkörper aus gut schweißbarem Stahl aufgebracht wird.

Aus der EP-Al-105 864 sind bereits Herzstücke, insbesondere Herzstückspitzen aus Stahl für Schienenkreuzungen oder -weichen, bekanntgeworden, deren Spitze bzw. Radlauffläche aus dem oben genannten aushärtbaren Stahl besteht. Die Beanspruchung von Herzstückspitzen ist besonders hoch beim Radüberlauf von der Flügelschiene auf die Spitze und nimmt mit größeren Achslasten und vor allem mit der Erhöhung der Fahrgeschwindigkeiten unverhältnismäßig zu, so daß an der Spitze größere Deformationen auftreten können, die die Lebensdauer eines Herzstückes beträchtlich herabsetzen. Der in der genannten EP-A vorgeschlagene Werkstoff wurde gemäß der EP-A durch Auftragschweißen auf einen Grundkörper aus Regelschienenstahl aufgebracht. Die Fertigung des gesamten Herzstückes aus einem derartigen hochverschleißfestem Stahl ist relativ teuer und die Verwendung von Verbundwerkstoffen mit einer derartigen verschleißfesten Schicht im Radüberlauf bzw. in der Herzstückspitze erlaubt es, die Grundmaterialien bzw. den Regelschienenstahl an den Anschlußstellen prohlemfrei miteinander zu verschweißen. Die Verbindungsschweißung der Grundwerkstoffe mittels elektrischer Abbrennstumpfschweißmaschinen ist ohne weiteres ohne besondere Vorkehrungen durchführbar. Dadurch, daß nun gemäß den bekannten Verfahren zur Herstellung derartiger Herzstücke das Material der Verschleißschicht durch Auftragschweißung auf den Grundkörper des Regelschienenstahls hergestellt wurde, bestand aber immer noch die Schwierigkeit, daß eine homogene thermische Verbindung ohne Qualitätsminderung nicht eintrat. Bei der Auftragschweißung von Verschleißwerkstoffen kommt es stets zu einer Aufmischung aus dem Grundmaterial und damit zu einer mehr oder minder ausgeprägten Zone von verfahrensbedingt entstehenden Inhomogenitäten. Die Vorteile des Materials für die Verschleißschicht können somit bei dem bekannten Auftragschweißen nicht vollständig genutzt werden.

Die Erfindung zielt nun darauf ab, ein Verfahren der eingangs genannten Art zu schaffen, mit welchem der Werkstoff für die Lauffläche mit dem Grundkörper homogen thermisch verbunden werden kann, um auf diese Weise die Qualität des Herzstückes zu verbessern. Im besonderen soll die Ausbildung einer inhomogenen Grenzschichte zwischen den verschiedenen Werkstoffen des Weichenherz- oder Schienenstückes vermieden werden. Zur Lösung dieser Aufgabe besteht das erfindungsgemäße Verfahren im wesentlichen darin, daß die Radlauffläche durch Sprengplattieren oder Elektronenstrahlschweißen oder Verbundwalzen auf den Grundkörper aus gut schweißbarem Stahl, insbesondere einen Grundkörper mit ≤ 0,24% C, ≤ 0,04% P bzw. S, ≤ 0,65% Si und ≤ 1,7% Mn, aufgebracht wird. Das Sprengplattieren stellt prinzipiell eine bekannte Technologie für die flächige metallische Verbindung gleicher oder unterschiedlicher Werkstoffe dar. Beim Sprengplattieren kommt die Verbindung durch einen kurzzeitig einwirkenden hohen Druck zustande, wobei die Metalloberflächen durch plastische Verformung in atomare Abstände zueinander gebracht werden. In der Bindezone wird im allgemeinen die Schmelztemperatur nicht erreicht und man spricht daher auch von einem Preßschweißverfahren. Durch Sprengplattieren wird die Möglichkeit geschaffen, auch Metalle zu verbinden, die beim Schmelzschweißen spröde Phasen bilden würden. Bei Wahl des erfindungsgemäß vorgeschlagenen Werkstoffes für die Verschleißschicht wird durch Sprengplattieren eine Aufmischungszone vermieden, und es werden auf diese Weise die Vorteile in bezug auf die Verschleißbeständigkeit der Radlaufflächen sicher erzielt. Analoge Überlegungen gelten für das Verbundwalzen.

Für das alternativ vorgeschlagene Elektronenstrahlschweißen bietet der gewählte Werkstoff für die Verschleißschicht die erforderlichen Voraussetzungen. Mittels Elektronenstrahlschweißung können nur Werkstoffe aufgetragen werden, deren Kohlenstoffgehalt relativ gering ist und die Verwendung des eingangs genannten Werkstoffes für die Verschleißschicht bietet die hiefür erforderlichen Voraussetzungen. Mittels Elektronenstrahlschweißung entsteht gleichfalls nur eine sehr dünne Verbindungsschicht, so daß Inhomogenitäten weitgehend vermieden sind. In beiden Fällen verbleibt ein Grundkörper aus gut schweißbarem Stahl, so daß die Verschweißung von Herzstücken mit Anschlußschienen ohne Schwierigkeiten durchgeführt werden kann. Derartige Herzstücke sind zum Unterschied von bekannten Werkstoffen für Herzstücke mit besonders guten Verschleißeigenschaften, wie beispielsweise Manganhartstahl sowie hochvergütete niedrig legierte Stähle leicht mit Anschlußschienen verschweißbar und können daher im lückenlos verschweißten Gleis des modernen Oberbaus ohne weiteres Verwendung finden. Demgegenüber erfordert die Verschweißung des Manganhartstahles und auch die von niedrig legierten vergüteten Herzstückspitzen mit Schienenwerkstoffen wegen der eingeengten Schweißeignung derartiger Stähle besondere Maßnahmen, die relativ aufwendig sind.

Eine weitere Verbesserung der Homogenität der thermischen Verbindung zwischen dem Werkstoff für die Radlauffläche und dem Grundkörper läßt sich dadurch erzielen, daß nach dem Aufbringen der Radlaufflächen, insbesondere nach einem Aufbringen durch Elektronenstrahlschweißen, eine Auslagerung bei Temperaturen von 350 bis 450°C, insbesondere 400°C, vorgenommen wird. Bei Temperaturen von 400°C wird hiebei zusätzlich der Vorteil erreicht, daß gleichzeitig ein Spannungsfreiglühen der Futterstückschweißnaht erfolgt, wobei der Grundwerkstoff ohnedies zu den gut schweißbaren Werkstoffen zählt.

Mit den genannten Verfahren können in bevorzugter Weise Laufflächen in einer Stärke von 12 bis 25 mm, insbesondere 15 bis 20 mm, aufgebracht werden.

Insgesamt wird somit ein Herzstück bzw. eine Flügelschiene geschaffen, bei welcher ein gut schweißbarer kostengünstiger Grundwerkstoff mit einer ein geringes Volumen und damit auch ein geringes Gewicht aufweisenden Schicht eines höchstverschleißfesten Werkstoffes zu einem Verbundwerkstoff kombiniert wird, welcher im höchstbeanspruchten Radüberlaufbereich eingesetzt werden kann. Es wird somit die kostengünstige Herstellung von hochwertigen Herzstücken möglich, welche auch für das lückenlose Verschweißen ohne weitere Maßnahmen geeignet sind. Insbesondere bei der Verwendung des Sprengplattierens für die Auftragung von Verschleißschichten bzw. Radlaufflächen kann mit einer relativ geringen Schichtstärke von 15 mm das Auslangen gefunden werden, wohingegen beim Elektronenstrahlschweißen bevorzugt Dikken von etwa 20 mm gewählt werden, um ein gewisses Ausmaß an Abbrand zu ermöglichen. Für den Einsatz beim Elektronenstrahlschweißen ist vor allem die Obergrenze von 0,03% Kohlenstoff in erster Linie zu beachten. Beim Sprengplattieren spielt diese Obergrenze keine Rolle.

## Patentansprüche

1. Verfahren zur Herstellung von Weichenherzstücken oder Schienenstücken im Radüberlaufbereich von Weichen bei welchem eine hochverschleißfeste Radlauffläche aus einem aushärtbaren Stahl mit der Zusammensetzung

C 0,01 bis 0,05%
Si 0,01 bis 0,2%
Mn 0,01 bis 0,2%
Co 0 bis 15%
Mo 1,5 bis 6%
Ni 7 bis 20%
Ti 0,1 bis 1%
Cr 0 bis 13%
Al 0 bis 0,2%
B 0 bis 0,1%
Zr 0 bis 0,1%

auf einen Grundkörper aus gut schweißbarem Stahl aufgebracht wird, dadurch gekennzeichnet, daß die Radlauffläche durch Sprengplattieren oder Elektronenstrahlschweißen oder Verbundwalzen auf den Grundkörper aus gut schweißbarem Stahl, insbesondere einen Grundkörper mit ≤ 0,24% C, ≤ 0,04% P bzw. S, ≤ 0,65% Si und ≤ 1,7% Mn aufgebracht wird.

2. Verfahren nach Anspruch 1, dadurch gekennzeichnet, daß nach dem Aufbringen der Radlauffläche, insbesondere nach einem Aufbringen durch Elektronenstrahlschweißen, eine Auslagerung bei Temperaturen von 350 bis 450°C, insbesondere 400°C, vorgenommen wird.

3. Verfahren nach Anspruch 2 oder 3, dadurch gekennzeichnet, daß die Lauffläche in einer Stärke von 12 bis 25 mm, insbesondere 15 bis 20 mm, aufgebracht wird.

## Revendications

1. Procédé de fabrication de pièces de coeur d'aiguillages ou de morceaux de rails, dans la zone des aiguillages destinée au roulement des roues, dans lequel une surface de roulement des roues très résistante à l'usure, réalisée en un acier susceptible d'être durci par précipitation dont la composition est la suivante

C 0,01 à 0,05%
Si 0,01 à 0,2%
Mn 0,01 à 0,2%
Co 0 à 15%
Mo 1,5 à 6%
Ni 7 à 20%
Ti 0,1 à 1%
Cr 0 à 13%
Al 0 à 0,2%
B 0 à 0,1%
Zr 0 à 0,1%

est rapportée par soudure sur un corps de base en acier susceptible d'être facilement soudé, caractérisé par le fait que la surface de roulement des roues est rapportée par placage par explosion ou bien par soudure par faisceau d'électrons, ou bien par laminage de matériau composite, sur le corps de base en acier susceptible d'être facilement soudé, en particulier un corps de base comportant ≤ 0,24% de C, ≤ 0,04% de P, respectivement de S, ≤ 0,65% de Si et ≤ 1,7% de Mn.

2. Procédé selon la revendication 1, caractérisé par le fait qu'après l'apport de la surface de roulement des roues, en particulier après un apport par soudure par faisceau d'électrons, on procède à un durcissement par précipitation à des températures de 350 à 450°C, en particulier de 400°C.

3. Procédé selon la revendication 2 ou 3, caractérisé par le fait que la surface de roulement rapportée a une épaisseur de 12 à 25 mm, en particulier de 15 à 20 mm.

## Claims

1. Process for manufacturing frogs or pieces of rail in the wheel-running zone of switch points, in which a highly wear-resistant wheel-running surface of a hardenable steel having the composition

C 0.01 to 0.05%
Si 0.01 to 0.2%
Mn 0.01 to 0.2%
Co 0 to 15%
Mo 1.5 to 6%
Ni 7 to 20%
Ti 0.1 to 1%
Cr 0 to 13%
Al 0 to 0.2%
B 0 to 0.1%
Zr 0 to 0.1%

is applied to a base body of readily weldable steel, characterized in that the wheel-running surface is applied by means of explosive plating or electron beam welding or compound-rolling to the base body of readily weldable steel, especially a base body having ≤ 0.24% of C, ≤ 0.04% of P and/or S, ≤ 0.65% of Si and ≤ 1.7% of Mn.

2. Process according to Claim 1, characterized in that age-hardening at temperatures from 350 to 450°C, in particular 400°C, is carriedout after the application of the wheel-running surface, in particular after application by means of electron beam welding.

3. Process according to Claim 2 or 3, characterized in that the running surface is applied in a thickness of from 12 to 25 mm, especially 15 to 20 mm.